# EUROPÄISCHE PATENTSCHRIFT

(11) **EP 0 459 186 B1**
(45) Veröffentlichungstag und Bekanntmachung des Hinweises auf die Patenterteilung: **10.11.1993**
(21) Anmeldenummer: 91107448.2
(22) Anmeldetag: 08.05.1991
(51) Int. Cl.: B65G 17/20, A41H 43/02

(54) **Hängeförderer mit einer Einrichtung zum Aufstauen der Förderwagen**
Overhead conveyor with a device for accumulating the trolleys
Transporteur suspendu avec un dispositif pour accumuler des chariots

(30) Priorität: 25.05.1990 DE 4016976
(43) Veröffentlichungstag der Anmeldung: 04.12.1991
(73) Patentinhaber: DÜRKOPP ADLER AKTIENGESELLSCHAFT, D-33719 Bielefeld (DE)
(72) Erfinder: Grube, Erwin, W-48 Bielefeld 18 (DE); Beckmann, Gottfried, W-4803 Steinhagen (DE)
(74) Vertreter: Rehmann, Klaus-Thorsten, Dipl.-Ing.

(56) Entgegenhaltungen:
- DE-C- 3 317 403
- US-A- 4 114 538
- Auszüge aus den Gebrauchsmustern, 24. Jahrgang, Heft 46, 12. November 1987, Wila Verlag, München, S. 2236, GM 8710162

## Beschreibung

Die Erfindung betrifft einen Hängeförderer mit einer Einrichtung zum Aufstauen der Förderwagen nach dem Oberbegriff des Anspruchs 1.

Solche als Trolleyförderer bezeichnete Hängeförderanlagen werden hauptsächlich in der Bekleidungsindustrie eingesetzt. Die Förderanlage besteht aus einer Trag- und Führungsschiene, auf der die Trolleys von einer Antriebskette angetrieben rollen. Eine solche Förderanlage ist beispielsweise aus der DE-C 33 17 403 bekannt. Die Trolleys werden gebildet aus einer u-förmigen Tragstange, die an beiden Enden mit Laufrollen versehen ist. Bei aufgegleisten Trolleys verläuft die Tragstange unterhalb der Trag- und Führungsschiene. Auf die Tragstange können beispielsweise auf Bügeln hängende Kleidungsstücke eingehängt werden. Wenn diese Trolleys innerhalb der Förderanlage gestaut werden sollen, weil das von ihnen transportierte Fördergut derzeit nicht verarbeitet werden kann, kann das über eine sogenannte Power & Free-Einrichtung (z.B.: DE-A-29 38 474) erfolgen, oder aber die Trolleys werden aus dem Hauptstrang ausgeschleust und in einen Nebenstrang geführt. In diesem Nebenstrang wirkt auf die Trolleys keine permanente Transportkraft mehr ein, so daß nach Anhalten des ersten Trolleys die nachfolgenden hierauf auflaufen und sich aufstauen. Nachteilig hieran ist, daß für diese Nebenstrecke ein sehr großer Platzbedarf notwendig ist, der sich um die volle Länge jedes weiteren aufzustauenden Trolleys erhöht.

Die US-A-4,114,538 offenbart einen Hängeförderer mit einer Aufstaueinrichtung, die aus zwei in einem parallelen Abstand zueinander geführten Strängen besteht.

Sowohl die Nebenstrecke aus der DE-A-33 17 403 als auch die Aufstaueinrichtung aus der US-A-4,114,538 ist, um die Trolleys durch die Gravitation rollen zu lassen, in einem von der Horizontalen abweichenden Winkel geneigt. Mit der Länge der Staustrecke wächst aber auch die benötigte Raumhöhe. Darüber hinaus entsteht beim Aufstauen eine relativ hohe Lärmbelästigung, da zumindest die letzten aufzustauenden Förderwagen, nachdem sie aus dem Hauptstrang ausgegleist wurden, mit nahezu unverminderter Geschwindigkeit auf die schon im Nebenstrang wartenden Wagen auffahren. Wenn die quer zur Transportrichtung stehenden Trolleys in der Gefällstrecke gegen einen Anschlag anlaufen besteht außerdem die Gefahr, daß durch die Wucht des Aufpralls die auf der Tragstange hängenden Bügel herunterfallen.

Der Erfindung liegt die Aufgabe zugrunde, einen bekannten Hängeförderer so fortzubilden, daß eine Staustrecke mit hoher Kapazität und geringem Raumbedarf geschaffen wird und darüber hinaus ein sanftes Aufstauen ermöglicht wird.

Die Lösung der Aufgabe erfolgt durch die kennzeichnenden Merkmale des Anspruchs 1.

Durch die horizontale Ausrichtung bleibt die Raumhöhe von der Aufstaueinrichtung unbeeinflußt. Weil die Trolleys von dem endlos umlaufenden Gurt nur über Haftreibung angetrieben werden, drehen sich die Rollen entgegen der Transportrichtung auf dem Gurt sowie die Trolleys auf ein Hindernis stoßen (Staustelle). Dadurch wird die bisherige Vortriebskraft für den Trolley unmittelbar in die an sich wirkungslose Antriebskraft für die Laufrolle gewandelt. Hierdurch wird ein sanftes und somit geräuscharmes Anstoßen der Trolleys untereinander möglich. Neben der Reduzierung der Lärmbelästigung resultiert hieraus gleichzeitig eine Erhöhung der Lebensdauer der Trolleys. Außerdem wird durch die Erfindung ein allmähliches Absenken der Geschwindigkeit möglich, nachdem die Trolleys auf den Nebenstrang ausgegleist wurden.

Durch die Ausgestaltung nach Anspruch 2 ist sichergestellt, daß die Trolleys durch den Fördergurt gezogen werden können.

Die Ausbildung des Hängeförderers nach Anspruch 3 stellt sicher, daß die Trolleys auf der Staustrecke nicht verkanten.

Mit der Ausgestaltung nach den Ansprüchen 4 bis 7 ist sichergestellt, daß eine exakte Führung des Trolleys auch in der Staustelle möglich ist.

Die Ausgestaltungsform nach Anspruch 8 vermindert zum einen die Verschmutzung des Fördergurts und begegnet zum anderen der Unfallgefahr, die für Bedienpersonal besteht, das sich unterhalb des Führungsprofils bewegt.

Anhand einer Zeichnung soll die Erfindung nachfolgend näher erläutert werden.

Es zeigt:
- Fig. 1: einen Hängeförderer in Teildarstellung,
- Fig. 2: die Draufsicht auf die Aufstaueinrichtung in schematischer Darstellung,
- Fig. 3: die Darstellung des Schnitts entlang der Linie A-A nach Fig. 2,
- Fig. 4: den als Fördergurt ausgebildeten Strang gemäß Sichtpfeil B nach Fig. 2 und 3 in abgebrochener Darstellung.

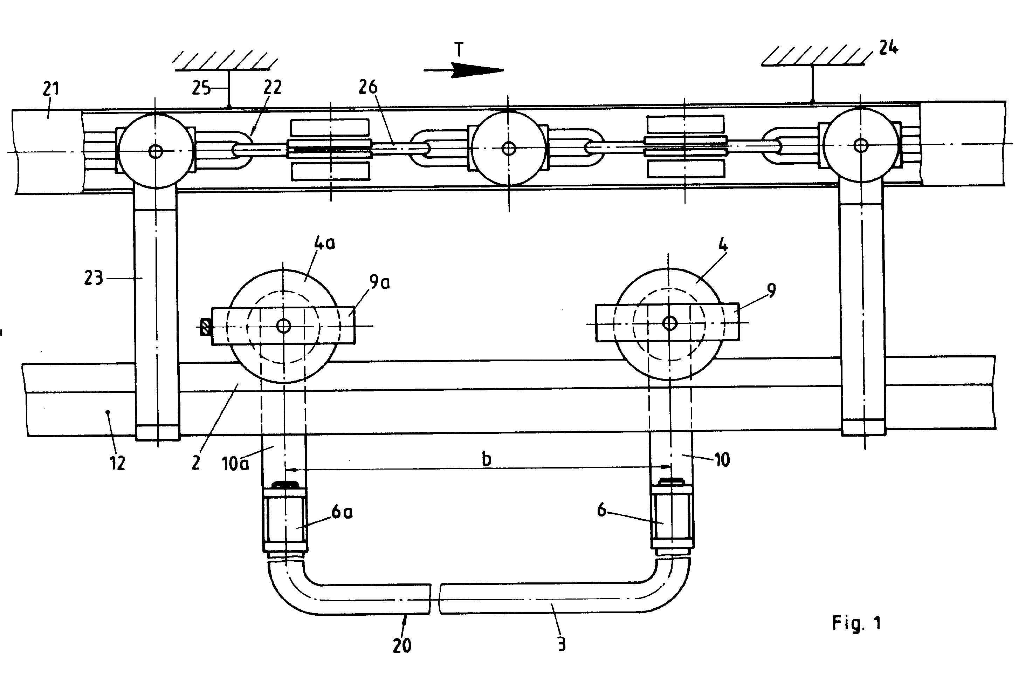

Fig. 1 zeigt die vereinfachte Teildarstellung eines Hängeförderers. Der im wesentlichen aus der Tragstange 3, den Tragarmen 10, 10a sowie den Stoßkappen 9, 9a und den Laufrädern 4, 4a bestehende Trolley 20 rollt auf der an der Hallendecke 24 befestigten Trag- und Führungsschiene 2. Innerhalb der Förderanlage werden beliebig viele Trolleys 20 über die oberhalb der Trag- und Führungsschiene 2 im Antriebsstrang 21 angeordneten Antriebskette angetrieben. Hierzu sind in regelmäßigen Abständen an den Kettengliedern 26 nach unten führende Mitnehmer 23 befestigt, die gegen die Stoßkappe 9 oder 9a der Trolleys 20 greifen und diese in Transportrichtung T vor sich her schieben. Auf die Tragstange 3 der Trolleys 20 können beispielsweise auf Bügelhaken hängende Kleidungsstücke oder ähnliches eingehängt und dann transportiert werden. Der so gebildete Hängeförderer kann beliebig lang ausgeführt sein und üblicherweise ist die Antriebskette 22 endlos umlaufend ausgebildet. Auch die Trag- und Führungsschiene 2 wird in aller Regel im Hauptstrang endlos ausgestaltet sein.

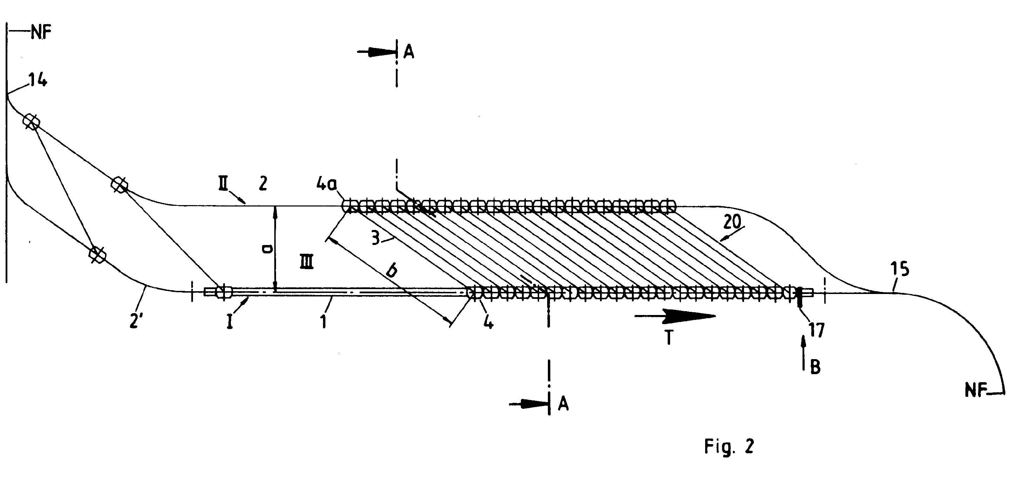

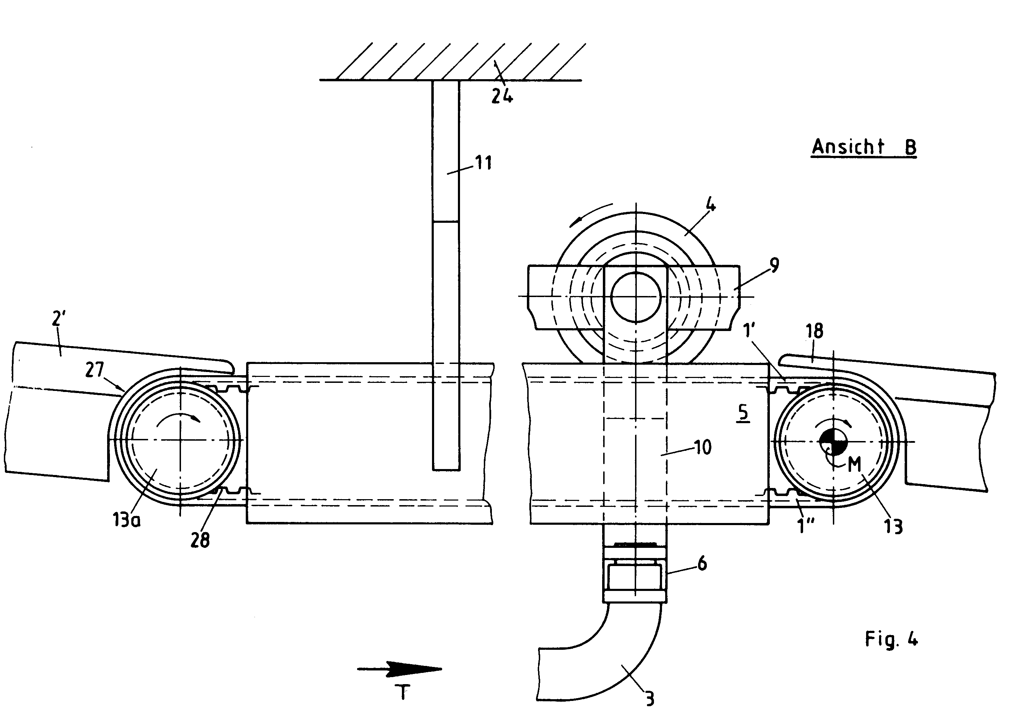

Um einzelne Trolleys aus dem direkten Transport herauszunehmen und aufzustauen, werden diese über eine bekannte, hier nicht näher dargestellte Weiche aus dem Hauptförderstrang in einen Nebenförderstrang ausgeschleust. Ein Teil dieses Nebenförderstranges NF mit der Aufstaueinrichtung III ist Fig. 2 entnehmbar. Die auf dem Nebenförderstrang NF rollenden Trolleys 20 werden an der Verzweigungsstelle durch die Weiche 14 auf zwei Stränge I, II geleitet. Die Weiche 14 ist dazu derart angesteuert, daß die vordere Laufrolle 4 des Trolleys 20 auf den Strang I und die hintere Rolle 4a auf den Strang II gelangt. Im weiteren Verlauf sind die Stränge I, II in einem parallelen Abstand a zueinander geführt. Nachdem die Stränge I, II in den parallelen Abstand a übergehen, wird der Strang I durch einen endlos umlaufenden Fördergurt 1 gebildet, der sich direkt an die zuvor starr ausgebildete Führungsschiene 2' anschließt. Diese hier nicht näher dargestellte Führungsschiene 2' entspricht dem auch sonst innerhalb der Förderanlage verwendeten Schienenprofil. Dieses Schienenprofil weist an der Übergangsstelle zum Fördergurt 1 eine viertelkreisförmige Ausfräsung 27 auf, die über die erste Führungsrolle 13a des Fördergurts 1 ragt (Fig. 4), um ein sicheres Überführen des Trolleys 20 von der Führungsschiene 2' auf den Fördergurt 1 zu gewährleisten, ist die Führungsschiene 2' in Transportrichtung T leicht geneigt.

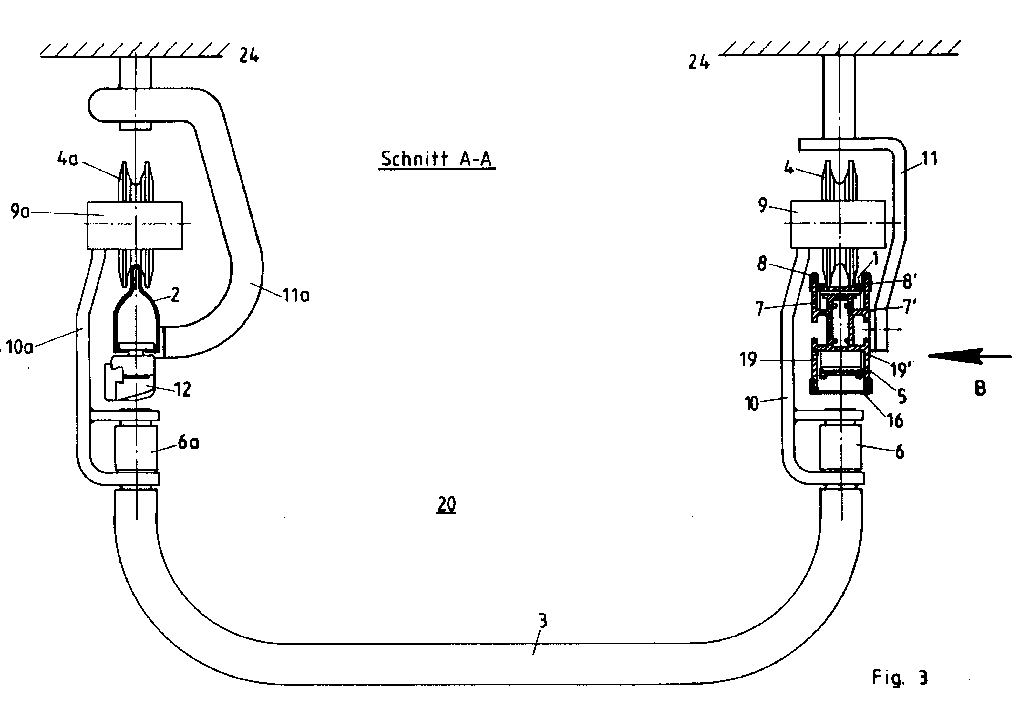

Der Fördergurt 1 wird über ein im wesentlichen hohles Rechteckprofil 5 geführt. Dieses Rechteckprofil 5 ist über die Abhängeinrichtung 11 an der Hallendecke 24 befestigt. Der Fördergurt 1 wird über jeweils an seinem Ende angeordnete, ortsfest gelagerte Rollen 13, 13a geleitet. Eine Rolle 13 wird in nicht näher dargestellter Weise durch einen Elektromotor angetrieben. Diese Antriebsform ist in Fig. 4 durch M angedeutet. Hierzu ist der Fördergurt 1 mit Zähnen 28 versehen, die in eine entsprechende Verzahnung der Rollen 13, 13a eingreifen.
Das Hohlprofil 5 weist, wie Fig. 3 zeigt, in Längsrichtung gesehen seitlich nach oben ragende Vorsprünge 7, 7' auf, die über den Fördergurt 1 hinausragen und diesen somit zwischen sich aufnehmen. Die oberen Enden der Vorsprünge 7, 7' sind mit elastischen Stoßleisten 8, 8' versehen, die aufgeklemmt werden können. Symmetrisch zu den nach oben ragenden Vorsprüngen 7, 7' ist das Profil 5 so ausgebildet, daß sich ebensolche Vorsprünge 19, 19' nach unten erstrecken. Diese sich nach unten erstreckenden Vorsprünge 19, 19' werden durch ein Abdeckblech 16 verschlossen, so daß sich in dem Rechteckprofil ein hohler Kanal ausbildet, in dem der untere Trum 1'' des Fördergurtes 1 gegen Verschmutzung und unbeabsichtigtes Berühren geschützt geführt ist. Der zweite Schienenstrang II weist das konventionelle Profil der Trag- und Führungsschiene 2 auf, so wie es auch im Hauptförderstrang und im Nebenförderstrang NF Verwendung findet. Dieses Profil 2 ist über die Abhängung 11a ebenfalls an der Hallendecke 24 befestigt. Für einen ordnungsgemäßen Stauvorgang ist es notwendig, daß der Trolley 20 parallel geführt werden kann, so daß die Laufräder 4, 4a folglich in einer horizontalen Ebene laufen müssen. In bekannter Weise sind die Laufrollen 4, 4a so profiliert, daß sie in das Profil der Führungsschiene 2 eingreifen können und ein Abgleiten wirkungsvoll verhindert ist. Die hierzu geeignete Profilausgestaltung und der unterhalb des Schienenstranges II verlaufende Entgleisungsschutz 12 sind aber bekannt und werden von der Anmelderin seit vielen Jahren an den von ihr vertriebenen Förderanlagen eingesetzt. Aus diesem Grund wird auf eine detaillierte Beschreibung verzichtet.
Je nach Länge der gewünschten Staustrecke werden die Stränge I, II am Ende durch eine umgekehrte Verzweigung und die Weiche 15 wieder in den Nebenförderstrang NF überführt. Am Ende der Staustelle ist ein Anschlag 17 angeordnet, der so angesteuert werden kann, daß er in den Transportbereich des Förderstrangs I hineinragt und aus diesem weggeschwenkt werden kann. Hiergegen läuft der erste zu stauende Trolley 20 an und wird am Weitertransport gehindert. Wenn der Anschlag 17 aus dem Transportbereich weggeschwenkt wird, setzen sich die Trolleys 20 wieder in Bewegung. Auch dies ist, da es nicht Gegenstand der Erfindung ist, nicht detailliert sondern nur rein schematisch dargestellt. Die Förderstränge I, II sind in einem parallelem Abstand a geführt, der geringer ist als der durch die Tragstange 3 festgelegte Abstand b zwischen den Rollen 4, 4a des Trolleys 20.

Über die Gelenke 6, 6a, die in den mit den Stoßkappen 9, 9a verbundenen Tragarmen 10, 10a gelagert sind, kann die Tragstange 3 des Trolleys 20 relativ zu den Rollen geschwenkt werden.

Nachfolgend soll die Wirkungsweise der Aufstaueinrichtung III erläutert werden:

Der auf die hier nicht näher dargestellten eingleisige Trag- und Führungsschiene des Nebenförderstranges NF geschleuste Trolley 20 wird durch die Weiche 14 an einer Verzweigungsstelle mit seiner vorderen Rolle 4 auf den Förderstrang I und mit seiner hinteren Rolle 4a auch den Förderstrang II durch entsprechende Ansteuerung der Weiche 14 geleitet. Nachdem der Förderstrang I von dem notwendigen Kurvenverlauf in einen gradlinig geführten Strang übergeht, gerät die Rolle 4 des Trolleys 20 auf den oberen Trum 1' des Fördergurtes 1. Die dem Trolley durch den ursprünglichen Antrieb über die Mitnehmer 23 erteilte kinetische Energie wird im weiteren Verlauf durch freies Ausrollen auf den Strängen I, II umgewandelt. Nachdem der Trolley 20 dieselbe Geschwindigkeit wie der Fördergurt 1 erreicht hat, wird er über die Haftreibung, die sich zwischen der Rolle 4 und der Oberfläche des Fördergurts 1 einstellt, in Transportrichtung T transportiert. Das heißt, der auf den beiden Strängen I, II schrägstehende Trolley 20 wird vom Fördergurt 1 und der Rolle 4 gezogen. Wenn der erste Trolley 20 gegen den in den Förderbereich hineinragenden Anschlag 17 anläuft, bleibt er stehen und die Antriebskraft zwischen dem Fördergurt 1 und der Rolle 4 wird dazu benutzt, die Rolle 4 entgegen der Transportrichtung T zu drehen. Der Trolley 20 bleibt also in dieser Lage stehen, während der Fördergurt 1 weiter angetrieben wird und nachfolgende Trolleys in der zuvor beschriebenen Weise zieht. Der zweite Trolley 20 wird mit der Stoßkappe 9 gegen die entsprechende Stoßkappe des ersten Trolleys 20 anlaufen und ebenfalls in der zuvor beschriebenen Weise stehenbleiben. Da die Geschwindigkeit beim Aufstauen von der Geschwindigkeit des Fördergurtes 1 beeinflußt wird und der Stoß, mit dem die einzelnen Trolleys 20 beim Aufstauen aneinander stoßen, stark abhängig ist von dem Haftreibungskoefizienten zwischen der Rolle 4 und dem Fördergurt 1, kann, wie sich in der Praxis gezeigt hat, ein sehr sanftes Aufstauen, das nur eine geringe Geräuschkulisse bewirkt, erfolgen.
Durch die Schrägstellung der Trolleys 20 kann bei gleichem in Transportrichtung notwendigem Raumbedarf ein Vielfaches der Trolleys 20 gespeichert werden. Der parallele Abstand a und die sich hieraus ergebende Schrägstellung der Trolleys 20 muß so gewählt werden, daß die Haftreibung zwischen Fördergurt 1 und Rolle 4 ausreicht, die Trolleys 20 zu ziehen.

## Patentansprüche

1. Hängeförderer mit einer Einrichtung zum Aufstauen von auf mindestens zwei hintereinander angeordneten Rollen laufenden Förderwagen, bei dem die Förderwagen während der Transportphase auf einer Lauf- und Führungsschiene rollen und die Rollen über eine insbesondere unterhalb der Lauf- und Führungsschiene verlaufenden zur Aufnahme des Förderguts vorgesehenen Tragstange verbunden sind, wobei die Aufstaueinrichtung aus zwei im parallelen Abstand zueinander geführten Strängen besteht,
dadurch gekennzeichnet,
daß die Stränge (I, II) der Aufstaueinrichtung (III) horizontal verlaufen und mindestens einer der Stränge (I, II) durch einen angetriebenen endlos umlaufenden Fördergurt (1) gebildet wird, auf dem sich eine der Rollen (4, 4a) abstützt.

2. Hängeförderer nach Anspruch 1,
dadurch gekennzeichnet,
daß der parallele Abstand (a) der Stränge (I, II) geringer ist als der Abstand (b) zwischen den Rollen (4, 4a) der Förderwagen (20).

3. Hängeförderer nach Anspruch 1,
dadurch gekennzeichnet,
daß die Umlaufgeschwindigkeit des Fördergurts (1) geringer ist als die Geschwindigkeit der Förderwagen (20) in der Transportphase.

4. Hängeförderer nach Anspruch 1,
dadurch gekennzeichnet,
daß der Fördergurt (1) von einem Führungsprofil (5) mit im wesentlichen rechteckigen Hohl-Querschnitt gestützt wird.

5. Hängeförderer nach Anspruch 4,
dadurch gekennzeichnet,
daß das Führungsprofil (5) in Längsrichtung gesehen beidseitig nach oben führende Vorsprünge (7, 7') aufweist, die in vertikaler Richtung den Fördergurt (1) überragen, wobei der Fördergurt (1) zwischen den Vorsprüngen (7, 7') verläuft.

6. Hängeförderer nach Anspruch 5,
dadurch gekennzeichnet,
daß die Vorsprünge (7, 7') mit einer elastischen Leiste (8, 8') überzogen sind.

7. Hängeförderer nach Anspruch 1,
dadurch gekennzeichnet,
daß der Querschnitt des Fördergurts (1) wesentlich breiter ist als der Querschnitt der Rollen (4, 4a) und an den Rändern sich nach oben erstreckende Vorsprünge aufweist.

8. Hängeförderer nach Anspruch 4,
dadurch gekennzeichnet,
daß das Führungsprofil (5) nach unten von einem Abdeckblech (16) so abgeschlossen wird, daß sich ein Kanal für den unteren Trum (1'') des Fördergurts (1) bildet.

## Claims

1. A suspension conveyor with a device for the queuing of trolleys which run on at least two rollers arranged one behind the other, whereby the trolleys roll on a roller and guide rail and the rollers are connected via a supporting rod arranged especially beneath the roller and guide rail to support the goods being conveyed and whereby the queuing device comprises two tracks arranged parallel to each other at a distance apart,
characterised in that
the tracks (I, II) of the queuing device (III) run horizontally and that at least one of the tracks (I, II) is formed from a driven, endless, revolving conveyor belt (1) upon which one of the rollers (4, 4a) is supported.

2. A suspension conveyor according to Claim 1,
characterised in that
the parallel distance (a) between the tracks (I, II) is less than the distance (b) between the rollers (4, 4a) of the trolleys (20).

3. A suspension conveyor according to Claim 1,
characterised in that
the rotational speed of the conveyor belt (1) is less than the speed of the trolleys (20) during the conveying phase.

4. A suspension conveyor according to Claim 1,
characterised in that
the conveyor belt (1) is supported by a guide section (5) which has a predominantly rectangular hollow cross-section.

5. A suspension conveyor according to Claim 4,
characterised in that
the guide section (5), when viewed longitudinally, has upward projections (7, 7') on both sides which project beyond the conveyor belt (1) in a vertical direction, whereby the conveyor belt (1) runs between the projections (7, 7').

6. A suspension conveyor according to Claim 5,
characterised in that
the projections (7, 7') are covered with an elastic strip (8, 8').

7. A suspension conveyor according to Claim 1,
characterised in that
the cross-section of the conveyor belt (1) is considerably greater than the cross-section of the rollers (4, 4a) and has upwardly-extending projections on its edges.

8. A suspension conveyor according to Claim 4,
characterised in that
the guide section (5) is sealed from beneath with a cover plate (16) such that a channel is formed for the lower track (1'') of the conveyor belt (1).

## Revendications

1. Transporteur suspendu avec un dispositif pour accumuler des chariots roulant sur au moins deux galets de roulement disposés l'un à la suite de l'autre, dans lequel les chariots roulent sur un rail de roulement et de guidage pendant la phase de transport, et les galets de roulement sont reliés par une barre porteuse, s'étendant notamment en dessous du rail de roulement et de guidage et prévue pour recevoir la marchandise transportée, le dispositif d'accumulation étant constitué de deux voies de transport s'étendant parallèlement à distance entre elles,
caractérisé en ce que les voies de transport (I, II) du dispositif d'accumulation (III) s'étendent horizontalement, et au moins une des voies (I, II) est formée par une bande transporteuse entraînée (1) circulant sans fin, sur laquelle s'appuie un des galets de roulement (4, 4a).

2. Transporteur suspendu selon la revendication 1, caractérisé en ce que l'écartement (a) des voies parallèles (I, II) est inférieur à l'écartement (b) des galets de roulement (4, 4a) des chariots (20).

3. Transporteur suspendu selon la revendication 1, caractérisé en ce que la vitesse de circulation de la bande transporteuse (1) est inférieure à la vitesse des chariots (20) pendant la phase de transport.

4. Transporteur suspendu selon la revendication 1, caractérisé en ce que la bande transporteuse (1) est soutenue par un profilé de guidage (5) de section creuse essentiellement rectangulaire.

5. Transporteur suspendu selon la revendication 4, caractérisé en ce que le profilé de guidage (5) présente de part et d'autre, vu en direction longitudinale, des parties en saillie dirigées vers le haut (7, 7') qui dépassent la bande transporteuse (1) en direction verticale, la bande transporteuse (1) se déplaçant entre les parties en saillie (7, 7').

6. Transporteur suspendu selon la revendication 5, caractérisé en ce que les parties en saillie (7, 7') sont recouvertes d'un rebord élastique (8, 8').

7. Transporteur suspendu selon la revendication 1, caractérisé en ce que la section de la bande transporteuse (1) est nettement plus large que la section des galets de roulement (4, 4a) et présente, sur les bords, des parties en saillie s'étendant vers le haut.

8. Transporteur suspendu selon la revendication 4, caractérisé en ce que le profilé de guidage (5) est fermé vers le bas par une tôle de recouvrement (6) de manière à former un canal pour le brin inférieur (1'') de la bande transporteuse (1).
